## Europäisches Patentamt

## European Patent Office

## Office européen des brevets

(19)

(11) Veröffentlichungsnummer: **0 229 624**
A2

(12) **EUROPÄISCHE PATENTANMELDUNG**

(21) Anmeldenummer: 87100079.0

(22) Anmeldetag: 07.01.87

(51) Int. Cl.⁴: **B 01 D 21/24**

(30) Priorität: 15.01.86 DE 3600952

(43) Veröffentlichungstag der Anmeldung:
22.07.87 Patentblatt 87/30

(84) Benannte Vertragsstaaten:
AT BE CH DE ES FR GB GR IT LI LU NL SE

(71) Anmelder: **Ralf F. Piepho Abwassertechnik GmbH**
**Rittergut 2**
**D-3015 Wennigsen 5 (DE)**

(72) Erfinder: **Piepho, Ralf F.**
**Rittergut 2**
**D-3015 Wennigsen 5 (DE)**

(74) Vertreter: **Rücker, Wolfgang, Dipl.-Chem.**
**Hubertusstrasse 2**
**D-3000 Hannover 1 (DE)**

(54) Vorrichtung zur Entfernung von Schwimmschlamm auf Flüssigkeitsoberflächen.

(57) Beschrieben wird eine Vorrichtung zur Entfernung von Schwimmschlamm auf Flüssigkeitsoberflächen, die ein Schaufelrad mit zwei Schaufeln umfaßt, die in einem die Schaufeln von drei Seiten umgebenden Gehäuse über eine halbe Umdrehung derselben umschließen, wobei die Schaufeln an einer zylindrischen Nabe befestigt sind, die unmittelbar an dem Fuß der Schaufel eine Öffnung aufweist, die das Gut, welches von den Schaufeln mitgenommen wird, in ein eine Schnecke umgebendes Rohr abgibt, das im Bereiche der Schaufeln eine nach oben gerichtete Öffnung aufweist, und wobei der Antrieb der Schaufeln über die Antriebswelle der Schnecke erfolgt, die über einen Blindflansch mit der Nabe verbunden ist.

FIG. 1

**Beschreibung**

Vorrichtung zur Entfernung von Schwimmschlamm auf Flüssigkeitsoberflächen

Die Erfindung betrifft eine Vorrichtung zur Entfernung von Schwimmschlamm auf Flüssigkeitsoberflächen, insbesondere auf Oberflächen von Abwasser in Kläranlagen, beispielsweise in Absetzbehältern und dergleichen.

Schwimmschlämme in Abwasseraufbereitungsanlagen können den Betrieb empfindlich stören; oft handelt es sich dabei um schaumige, voluminöse Stoffe, die bei der Gärung des Abwassers unter Luftabschluß entstehen und durch Bakterien hervorgerufen werden.

Eine derartige Gärung ist bei Abwässern erforderlich, die vorwiegend Kohlenhydrate enthalten und die anschließend einer biologischen Reinigung unterzogen werden, um die Kohlenhydrate abzubauen. Der dabei auftretende Schlamm verhindert das Verfahren und deshalb ist es erforderlich, den Schwimmschlamm zu zerstören oder zu beseitigen.

Diese sich auf einer Abwasserschicht, beispielsweise in einem Faulraum, bildende Schwimmschlammschicht wird auch als Schlammdecke bezeichnet, und kann sich aus einer Vielzahl von Stoffen, beispielsweise Haaren, Pflanzenfasern, Papierresten, mit Gaseinschlüssen bilden. In dieser Schlammdeckenzone konzentrieren sich organische Stoffe und neigen zu Anhäufung Gasaustritt, nimmt Raum weg und führt zu ernsten Störungen im Faulprozeß.

Zur Zerstörung solcher Schlammdecken ist es bekannt, ein von einem Elektromotor angetriebenes Flügelrad zu verwenden oder einen sogenannten Schraubenschaufler, der bis in das unterere Drittel eines Faulraumes hineinreicht und mit einem Leitrohr versehen ist, so daß der Schlamm durch die Propellerwirkung nach oben und aus dem Zylinder herausgeschleudert wird, so daß er die obere Oberfläche der Schlammdecke beaufschlaft.

Am häufigsten jedoch werden außerhalb des Faulraumes installierte Umwälzpumpen verwendet, welche den Schlamm über eine Rohrleitung auf die Schwimmdecke befördern oder der Frischschlamm wird über eine Rohrleitung auf die Schwimmdecke gepumpt.

Diese Einrichtungen sind alle mit mehr oder weniger großen Nachteilen behaftet, beispielsweise die Verwendung von Umwälzpumpen, mit welchem der unten abgezogene Schlamm wieder auf die Schwimmdecke gegeben wird, erfordert eine gleichmäßige Verteilung des Schlammes auf der Schlammdecke. Außerdem ist die Installation aufwendig und kann selbst wieder durch Rohrverstopfungen zu Störungen führen. Auch die Verwendung eines Flügelrades führt meistens nur dazu, daß ein Loch in die Schwimmdecke gebohrt wird und der Rest unbeschädigt bleibt (Lueger, Lexikon der Technik, 4. Aufl., Bd. 11, S. 370).

Aufgabe der vorliegenden Erfindung ist es daher, eine Vorrichtung vorzuschlagen, die in einfacher Weise ausgebildet ist und eine effektive Zerstörung der aus Schwimmschlamm oder anderen Stoffen bestehenden Schichtdecke, beispielsweise in Faultürmen, ermöglicht.

Gelöst wird diese Aufgabe durch ein zweiflügliges Schaufelrad, dessen Schaufeln auf einer zylindrischen Nabe radial stehend befestigt sind, die in Rotationsrichtung der Schaufeln vor diesen eine Ausnehmung aufweist, welche in einer Stellung einer jeden Schaufel mit einer Öffnung eines Zylinders fluchten, in welchem die das Schaufelrad antreibende Welle verläuft, die mit einer Schnecke umgeben ist und wobei das Schaufelrad mit einem Gehäuse umgeben ist, das vom untersten Punkt der Schaufel in Drehrichtung derselben bis zum obersten Punkt der Schaufeln reicht.

Die Nabe, in der die Schaufeln befestigt sind, ist ihrerseits antriebsseitig mit einem Radialflansch verbunden, der wiederum auf der Antriebswelle von Schaufelrad und Schnecke befestigt ist.

In Verfolg des Erfindungsgedankens sind die Seitenwände des halben Gehäuses seitlich und gegebenenfalls divergierend über die Antriebswelle des Schaufelrades hinausgezogen und bilden zusammen mit einer Verlängerung des halbkreisförmigen anderen Teils des Gehäuses, das sich sehnenartig vom Gehäuse weg erstreckt, eine Art Zuführungstrichter für den Schwimmschlamm.

Die Enden der Schaufeln sind vorzugsweise mit Gummiplatten auswechselbar versehen, welche auf der Innenseite des halbkreisförmigen Gehäuseteils entlanggleiten. Dieses Teil besitzt einen Radius, der dem Radius der Schaufeln, vom Mittelpunkt der Antriebswelle aus gemessen, entspricht.

Die in der zylindrischen Nabe der Schaufeln gebildeten, vorzugsweise rechteckigen Öffnungen werden durch an den unmittelbaren von den Öffnungen nach außen aufsteigenden Rändern der Schaufeln ausgehenden und rechtwinklig dazu stehenden Blechen zu einer trichterförmigen Gestalt ergänzt. Die Gummiplatten an den wirksamen Enden der Schaufel werden durch Metallplatten gehalten, die mit Schrauben an der Schaufel befestigt sind.

Der Antrieb dieser Vorrichtung erfolgt mit regelbarer Umdrehungszahl. Breite und Länge der Schaufeln richtet sich nach der zu lösenden oder zu beseitigenden Schlammdecke

Die Erfindung wird nun anhand einer Zeichnung, in der ein Ausführungsbeispiel dargestellt ist, näher erläutert.

In der Zeichnung stellen dar:

Fig. 1 eine Ansicht der Vorrichtung von der Seite.

Fig. 2 eine Seitenansicht, teilweise im Schnitt, des Schaufelrades mit Antriebswelle und darauf befestigter Schnecke und

Fig. 3 einen Schnitt auf der Linie A - B der Fig. 1.

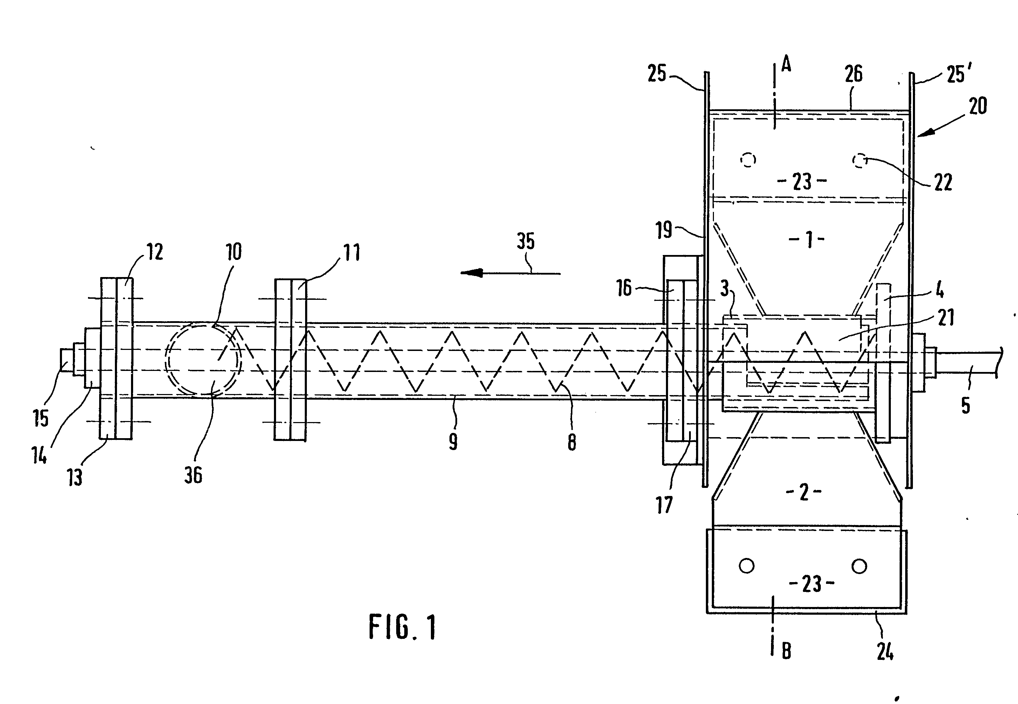

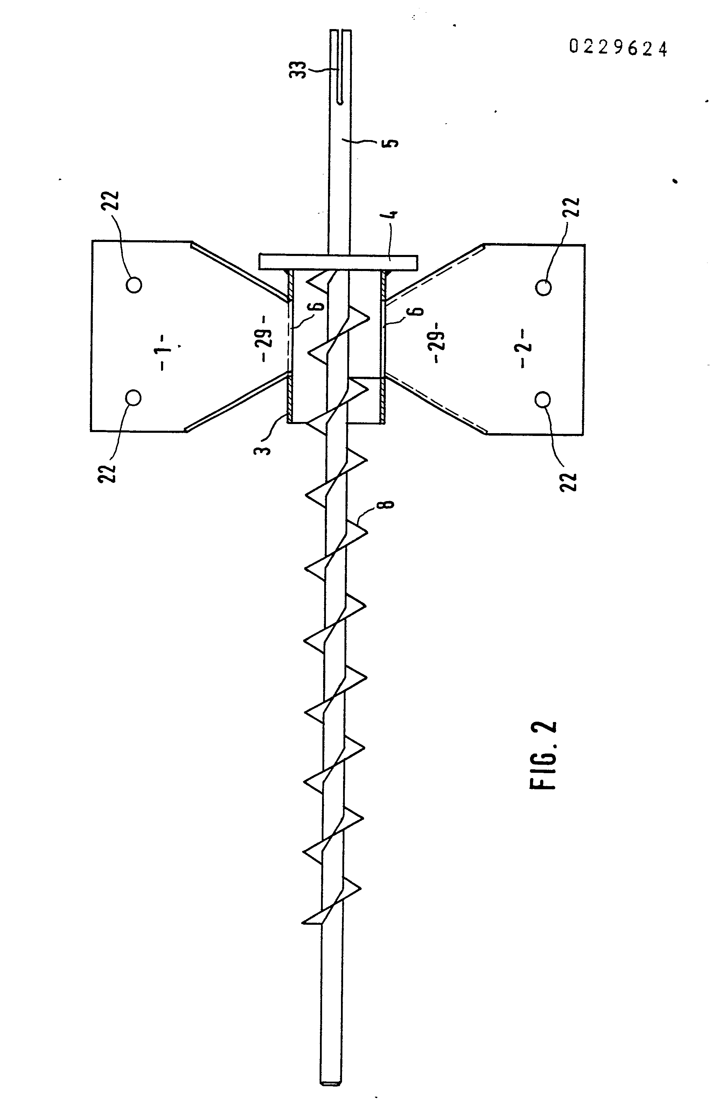

In Fig. 1 ist die Vorrichtung in einer Seitenansicht dargestellt. Die Bezugzeichen 1 und 2 bezeichnen die Schaufeln des Schaufelrades, welches noch einmal für sich mit seinen Bauteilen in Fig. 2 gezeigt ist.

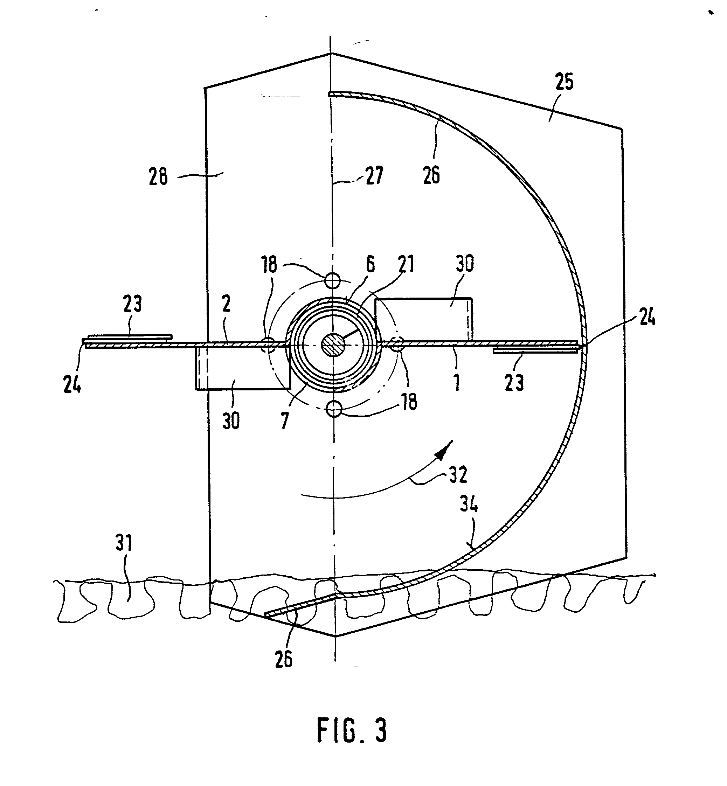

Die Schaufeln 1 und 2 sind an einer zylindrischen Nabe 3 befestigt, die mit einem Ende an einem Blindflansch 4 befestigt ist, der wiederum an der Antriebswelle 5 befestigt ist. Die Nabe 3 ist, wie insbesondere aus Fig. 3 ersichtlich, mit rechteckigen Ausschnitten 6 und 7 versehen.

Auf der Welle 5 ist schließlich eine Schnecke 8 befestigt, die mit geringem Spiel in einem Rohr 9 umläuft, an das sich ein T-Stück 10 anschließt, beispielsweise durch Verbindungsflansch 11, über das das geförderte Gut austritt. Dieses T-Stück 10 ist ebenfalls mit einem endständigen Flansch 12 versehen, an dem ein weiterer Flansch 13 befestigt ist, der mittig das Lager 14 für das Ende 15 der Antriebswelle 5 aufnimmt.

Das die Schnecke umgebende Rohr 9 ist an seinem schaufelradseitigen Ende mit einem Radialflansch 16 umgeben, mit dem es an einem Flansch 17 lösbar befestigbar ist, vermittels der insbesondere in Fig. 3 gut sichtbaren Schrauben 18. Dieser Flansch 17 ist an der Gehäuseseitenwand 19 befestigt und hat einen inneren Durchmesser, der es gestattet, das die Schnecke umgebende Rohr 9 in das Gehäuse 20, in welchem die Schaufeln 1 und 2 umlaufen, einzusetzen. Damit dies geschehen kann, ist das die Schnecke umgebende Rohr 9 in seinem Durchmesser um soviel kleiner, daß es mit geringem Spiel in die Nabe 3 hineinpaßt.

Zur Erfüllung der gelösten Aufgabe ist nun das die Schnecke umgebende Rohr 9 im Bereiche der in der Nabe 3 gebildeten Öffnung (siehe Fig. 3) ebenfalls mit einem Ausschnitt 21 auf seiner oberen Hälfte versehen. Der Zweck dieser Ausschnitte in der Nabe 3 und dem Rohr 9 der Schnecke 8 wird weiter unten noch erläutert.

Die Schaufeln 1 und 2 sind an ihren nach außen weisenden Enden mit Bohrungen 22, die Gewindebohrungen sein können, versehen, an denen vermittels entsprechender Schrauben Platten 23 befestigbar sind, zwischen denen und den Schaufeln Gummiplatten 24 festgeklemmt sind.

Die Vorrichtung besitzt schließlich das in Fig. 1 mit 20 bezeichnete Gehäuse, welches aus den Seitenwänden 25 und 25' besteht, und ein kreisbogenförmiges Gehäuseteil 26, dessen Krümmungsradius dem Radius der Schaufeln 1 und 2 entspricht.

Am unteren Ende (Fig. 3) ist dieses Gehäuseteil 26 sehnenartig nach außen bei 27 weggeführt und außerdem sind die Gehäuseseitenwände 25 im Bereiche der sehnenartigen Verlängerung 27 trichterförmig durch Teile 28 erweitert, die zusammen mit dem Teil 26 eine Art Trichter bilden.

Die Schaufeln setzen sich in dem Ausführungsbeispiel aus einem rechteckigen Teil zusammen, auf welchem die Gummiplatte 24 befestigt ist, und aus einem trapezförmigen Teil 29, das rechtwinklig davon wegstehende seitliche Bleche 30 trägt, die ebenfalls mit dem Teil 29 der Schaufel trichterartige oder rinnenartige Gebilde ergeben.

In Fig. 3 ist nun die Anordnung der Vorrichtung zur Entfernung einer Schwimmschlammdecke, die in Fig. 3 mit 31 bezeichnet ist, dargestellt. Die Vorrichtung ist vorzugsweise aus Stahlblech, das oberflächenvergütet oder korrosionsgeschützt sein kann. Die Umdrehungsrichtung der Schaufeln erfolgt in Richtung des Pfeiles 32 in Fig. 3.

Zusammenfassend ist also festzustellen, daß das Schaufelrad der Vorrichtung zwei Schaufeln 1 und 2 besitzt, die in einem Gehäuse umlaufen, welches die Schaufeln für eine halbe Umdrehung der Welle durchlaufen und wobei die Gummiplatte 24 an den Enden der Schaufeln 1 und 2 die innere Oberfläche des kreisbogenförmigen Gehäuseteils 26 und den Streifen der Seitenflächen 25 und 25' überstreift, der der Breite der Gummiplatte 24 entspricht.

Die Wirkungsweise der Vorrichtung ist nun folgende.

Die Vorrichtung wird, wie in Fig. 3 gezeigt, in einem Faulbehälter oder dgl. Einrichtung, in der sich eine solche Schwimmschlammdecke bilden kann, derart montiert, daß sie mit ihrem unteren Teil wie in Fig. 3 ein Stück in eine Schlammdecke hineinragt bzw. in einer solchen Höhe in der eine Schlammdecke liegt, wenn sich eine solche bilden würde.

Der Antrieb der Vorrichtung, der auf das Wellenende 5 erfolgt -bei 33 ist eine Keilnut für ein Antriebsrad dargestellt - wird eingeschaltet und die Schaufeln laufen in Richtung des Pfeiles 32 mit einer bestimmten regelbaren Geschwindigkeit um.

Beim Eintritt der Schaufeln 1 und 2 in die Schlammdecke 31 wird ein Teil der Schlammdecke herausgeschlagen oder herausgedrückt durch das Gehäuse 20, dabei an den Gehäuseseitenwänden 25 und 25' und über die innere Oberfläche 34 der kreisbogenförmigen Wand 26 mitgenommen bis die Schaufel 1 oder 2 ihre obere Lage erreicht haben, in der das Teil der Schlammdecke nach unten in Richtung der Linie 27, durch die Öffnung 6 der Nabe 3 in das zur Hälfte aufgeschnittene Rohr 9 und in die Wendeln der Schnecke 8 fällt.

Da die Schnecke zusammen mit den Schaufeln umläuft, wird das Gut, welches durch die Öffnung in der Nabe 3 und in Rohr 9 in die Schnecke gefallen ist, in Richtung des Pfeiles 35 transportiert, um schließlich durch die Öffnung 36 des T-Stückes 10 herausgepreßt zu werden.

Die Schlammdecke 31 kann nun sich wieder ausdehnen und füllt das Loch, welches eine Schaufel in diese geschlagen hat, wieder aus, oder die Schlammdecke wird durch andere Einrichtungen oder durch die Fließ bewegung des darunter stehenden Abwassers der Vorrichtung zugeführt, so daß bei der nächsten Umdrehung wieder ein Stück der Schlammdecke in das Gehäuse 20 und damit in die Ausnehmung der Nabe 3 und Rohr 9 befördert wird.

Die Abmessungen der Vorrichtung sind praktisch wählbar, je nach Verwendungszweck und Größe der Schlammdecke.

Das Gehäuse ist an einem Teil des Faulturmes oder der Beckenwand oder an einem Teil der Beckenwand befestigbar oder über das Rohr, welches die Schnecke 8 umgibt.

**Patentansprüche**

1. Vorrichtung zur Entfernung von Schwimmschlamm auf Flüssigkeitsoberflächen, gekennzeichnet durch ein zweiflügliges Schaufelrad, dessen Schaufeln (1, 2) auf einer zylindrischen Nabe (3) radial stehend befestigt sind, die in Rotationsrichtung der Schaufeln vor diesen Ausnehmungen (6, 7) aufweist, welche in einer Stellung einer jeden Schaufel mit einer Öffnung (21) eines Zylinders (9) fluchten, in welchem die das Schaufelrad antreibende Welle verläuft, die mit einer Schnecke umgeben ist und wobei das Schaufelrad mit einem Gehäuse (20) umgeben ist, das von einem untersten Punkt der Schaufel bis zum obersten Punkt der Schaufel reicht.

2. Vorrichtung nach Anspruch 1, dadurch gekennzeichnet, daß die Nabe (3), an der die Schaufeln (1, 2) befestigt sind, ihrerseits mit einem Radialflansch (4) verbunden ist, der wiederum auf der Antriebswelle (5) befestigt ist.

3. Vorrichtung nach Anspruch 1 und 2, dadurch gekennzeichnet, daß die Enden der Schaufeln (1, 2) rechteckige Gestalt haben und mit einer Gummiplatte (24) versehen sind, die auf den Oberflächen der angrenzenden Gehäuseteil (25, 26) entlanggleiten.

4. Vorrichtung nach Anspruch 1, dadurch gekennzeichnet, daß das die Öffnung (21) tragende oder enthaltende, die Schnecke (8) umgebende Rohr (9) im Durchmesser kleiner ist und mit geringem Spiel in das Innere der Nabe (3) hineinragt und stationär ist.

5. Vorrichtung nach Anspruch 1 bis 3, dadurch gekennzeichnet, daß das die Schnecke (8) umgebende Rohr (9) mit einem Radialflansch (16) versehen ist, der vermittels Schrauben (18) mit einem Flansch (17) verbindbar ist, der in der Seitenwand (25) des Gehäuses (20) befestigt ist und eine Öffnung aufweist, die den Durchgang des Rohres (9) ermöglicht.

6. Vorrichtung nach Anspruch 1 bis 5, dadurch gekennzeichnet, daß das dem Antriebsende (30) der Welle (5) gegenüberliegende Ende (15) in einem Lager (14) ruht, das in einem Flansch (13) befestigt ist, der das Rohr (9), welches die Schnecke (8) umgibt, verschließt.

7. Vorrichtung nach Anspruch 1 bis 6, dadurch gekennzeichnet, daß das Rohr (9), welches die Schnecke (8) umgibt, durch ein T-Stück (10) verlängert ist, welches eine Öffnung (36) aufweist, durch die das Gut, das von der Schnecke befördert wird, austritt.

0229624

FIG. 1

FIG. 2

0229624

FIG. 3

0229624